# EUROPÄISCHE PATENTANMELDUNG

(11) **EP 1 072 363 A1**
(43) Veröffentlichungstag der Anmeldung: **31.01.2001**
(21) Anmeldenummer: 00114371.8
(22) Anmeldetag: 05.07.2000
(51) Int. Cl.: B25C 1/06

(54) **Vorrichtung zum Erzeugen einer schlagartigen Vorschubbewegung**

(30) Priorität: 17.07.1999 DE 19933636
(71) Anmelder: Adolf Würth GmbH & Co. KG, 74653 Künzelsau (DE)
(72) Erfinder: Schröter, Dirk, 74635 Kupferzell (DE); Jochum, Peter, 6812 Meiningen (AT)
(74) Vertreter: Patentanwälte Ruff, Beier und Partner

(57) **Zusammenfassung**

Ein Bolzenschubgerät enthält eine Vorschubeinrichtung, die einen zu setzenden Nagel aus einer Mündung des Geräts heraustreibt. Zur Bewegung der Vorschubeinrichtung wird eine Schlagfeder (29) verwendet, die bei Auslösung einen Kolben (4) vorwärts bewegt. Zum Spannen der Schlagfeder (29) ist ein Elektromotor vorgesehen, der über ein Getriebe einen Schieber zum Spannen der Schlagfeder bewegt.

Zwischen dem Motor und dem Getriebe wird eine Kupplung (37) angeordnet, die durch ein Betätigungsmittel eingerückt werden kann.

## Beschreibung

Die Erfindung geht aus von einem Gerät, mit dem man eine schlagartige Vorschubbewegung erzeugen kann. Ein Beispiel für ein solches Gerät ist ein Bolzenschubgerät, mit dem man aus Stahl bestehende Bolzen, Nägel oder dergleichen ohne vorzubohren in einen harten Untergrund einschieben kann, beispielsweise Mauerwerk, Beton oder Stahl.

Seit langem sind Bolzenschubgeräte bekannt, die durch Zünden einer Treibladung den Vorschub erzeugen.

Es ist ebenfalls eine Vorrichtung vorgeschlagen worden (DE 198 22 081), bei der der Vorschub durch die Entspannung einer Gasfeder erzeugt wird. Die Gasfeder wird mit Hilfe eines motorischen Antriebs gespannt. Zwischen je zwei Setzvorgängen muss die entspannte Feder also wieder gespannt werden. Hierzu ist ein Elektromotor vorgesehen, der diese Aufgabe übernimmt. Zum Spannen wird der Elektromotor gestartet, der über eine getriebliche Verbindung einen Schieber bewegt, der die Feder spannt und schließlich den Setzvorgang auslöst.

Der Erfindung liegt die Aufgabe zugrunde, eine Vorrichtung der eingangs genannten Art im Hinblick auf ein schnelleres Arbeiten und schnelles Ansprechen weiterzuentwickeln.

Zur Lösung dieser Aufgabe schlägt die Erfindung eine Vorrichtung mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Mit Hilfe der von der Erfindung vorgeschlagenen Vorrichtung ist es möglich, den Motor auch dann laufen zu lassen, wenn gerade kein Spannvorgang erfolgen soll. Zum Durchführen des Spannvorgangs und der anschließenden Freigabe der gespannten Feder braucht dann nur noch die Kupplung ausgelöst zu werden, das heißt sie muss die Verbindung zwischen dem Antrieb und dem Motor herstellen. Es ist daher nicht mehr erforderlich, dass zunächst der Motor aus dem Stillstand starten muss. Dies kann die Vorgänge beschleunigen.

Darüberhinaus kann das Vorhandensein der Kupplung auch zu anderen Zwecken ausgenutzt werden, beispielsweise zu Sicherheitszwecken.

Die Erfindung schlägt vor, dass die Kupplung zwischen dem Motor und einem Getriebe zum Spannen der Schlagfeder angeordnet sein kann. Es sind zwar auch andere Stellen zur Anbringung der Kupplung möglich, die Erfindung bevorzugt aber diese Anordnung, die es unter anderem ermöglicht, Motor und Kupplung in einem Gehäuse nahe beieinander zusammenzufassen.

In Weiterbildung der Erfindung kann vorgesehen sein, dass die Kupplung durch das Andrücken der Vorrichtung gegen den Untergrund, in den gearbeitet werden soll, auslösbar bzw. einrückbar ist. Bei den eingangs erwähnten Bolzenschubgeräten ist es aus Sicherheitsgründen erforderlich, dass diese nur dann ausgelöst werden können, wenn sichergestellt ist, dass die Mündung gegen einen Untergrund gerichtet ist. Damit soll ein Missbrauch der Geräte verhindert werden. Dies geschieht im Stand der Technik dadurch, dass die Bolzenführung durch Andrücken der Vorrichtung etwas in die Vorrichtung hineingedrückt wird, um eine Sperre zu überwinden. Bei der Vorrichtung nach der Erfindung kann dieses Andrücken, das durch ein Einschieben eines Teils in die Vorrichtung festgestellt wird, zum Einrücken der Kupplung ausgenutzt werden.

Beispielsweise kann die Vorrichtung eine Anpresshülse aufweisen, die in das Gehäuse einschiebbar ist.

In Weiterbildung der Erfindung kann vorgesehen sein, dass die Kupplung und der Motor unabhängig voneinander einschaltbar bzw. betätigbar sind. Dies führt ebenfalls zu einer Verbesserung der Sicherheitsfunktion des Geräts.

Als Kupplung kann eine beliebige den Anforderungen entsprechende Kupplung verwendet werden. Insbesondere schlägt die Erfindung jedoch eine Lamellenkupplung vor.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine teilweise schematische Schnittdarstellung durch ein Gerät nach der Erfindung;
- Fig. 2: ebenfalls schematisch einen in Figur 1 nicht dargestellten Teil der Vorrichtung.

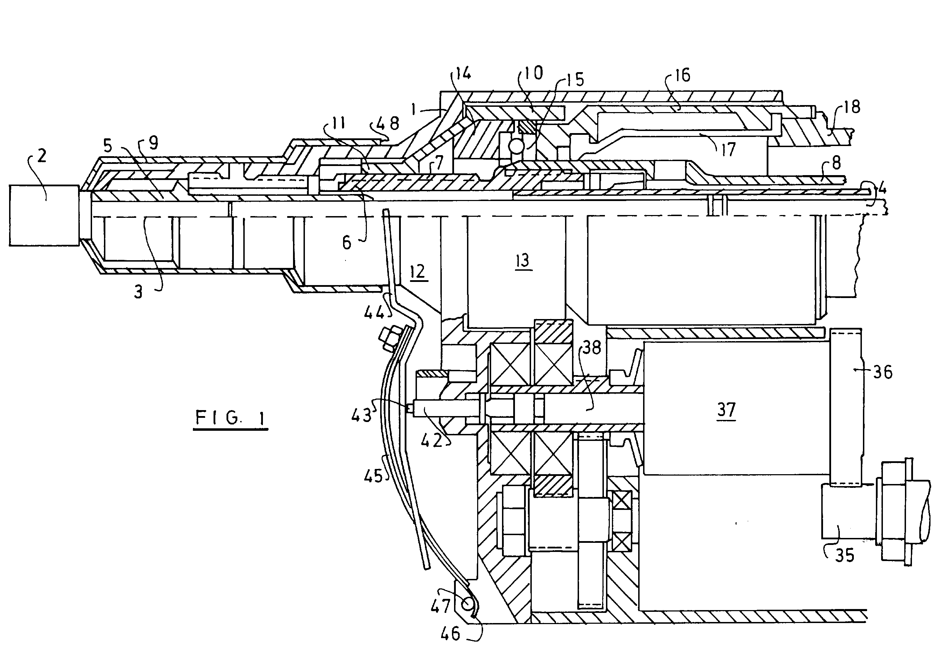

Figur 1 zeigt in einer schematischen Schnittdarstellung den Teil eines Bolzenschubgeräts, in dem der Antrieb enthalten ist. Dieses Bolzenschubgerät soll als Beispiel für Vorrichtungen dienen, mit denen die Erfindung verwendet werden kann. Das Bolzenschubgerät ist in einem äußeren Gehäuse 1 untergebracht. Auf der in Figur 1 linken Seite ist die Mündung 2 vorhanden, aus der ein Stahlnagel ausgegeben wird. Die Mündung 2 ist in der in der Figur gestrichelt angedeuteten Achse 3 angeordnet. Diese zentrale Achse durchsetzt das gesamte Gerät. Sie ist als Achse sowohl für den zu setzenden Nagel als auch für die Bewegung des Kolbens 4, mit dem der Nagel gesetzt wird, vorgesehen.

Koaxial zur Achse 3 ist, ausgehend von der Mündung 2, eine Nagelhülse 5 vorgesehen, die zur Führung des Nagels während des Setzens dient.

Im Anschluss an die Nagelhülse 5 ist in dem Gehäuse ebenfalls koaxial zur Achse 3 eine Spindel 6 angeordnet, die an ihrer Außenseite ein Gewinde 7 aufweist. Mit dem weiter rechts gelegenen Ende der Spindel 6 ist die Kolbenführung 8 verschraubt, die den im vorliegenden Fall zweiteiligen Kolben 4 während des Setzvorgangs führt. Bei dem Gewinde 7 handelt es sich um ein Steilgewinde.

Die Mündung 2 ist mit einer Anpresshülse 9 verbunden, die um einen gewissen Betrag axial verschiebbar ist.

Auf das Außengewinde 7 der Spindel 6 ist ein Spindelzahnrad 10 aufgeschraubt, das dadurch gegenüber der Spindel 6 verdreht und damit verschoben werden kann. Das Spindelzahnrad 10 weist eine Außenverzahnung auf, die im Einzelnen nicht dargestellt ist.

Das Spindelzahnrad 10 weist einen ersten Absatz 11 auf, wo es mit seinem Gewinde in das Gewinde 7 der Spindel 6 eingreift. Daran schließt sich ein kegelförmiges Teil 12 an, der in einen Hülsenteil 13 übergeht. Innerhalb des Hülsenteils 13 ist ein Distanzring 14 vorgesehen, dessen von der Mündung 2 wegzeigende axiale Stirnseite über ein Kugellager 15 gegen eine Niederdruckhülse 16 einwirkt. Die Niederdruckhülse 16 weist eine koaxiale Hülse 17 auf, die zwischen sich und der Kolbenführung 8 einen Speicher bildet.

Das dem Spindelzahnrad 10 abgewandte Ende der Niederdruckhülse 16 und der Hülse 17 sind mit einer Kolbenhülse 18 verbunden.

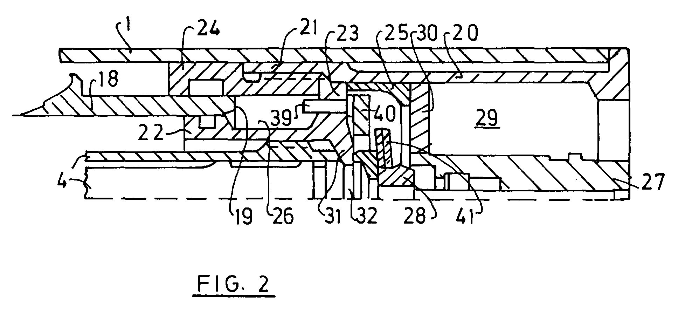

Die Kolbenhülse 18 greift mit ihrer freien Stirnseite 19 in einen Druckraum ein, der im folgenden unter Bezugnahme auf Figur 2 beschrieben wird.

In das in Figur 2 rechte, also der Mündung 2 des Gerätes entgegengesetzte Ende des Gehäuses 1 ist eine Hochdruckhülse 20 eingesetzt, in dessen nach innen gerichtetes Ende 21 eine Innenhülse 22 mit einem Flansch 23 eingesetzt ist. Diese Innenhülse ist durch das Einschrauben einer Gewindehülse 24 festgelegt, die den Flansch 23 gegen ein weiteres Element 25 festlegt. Zwischen der Innenhülse 22 und der Gewindehülse 24 ist ein Ringraum 26 gebildet, der durch mehrere Bohrungen in dem Flansch 23 mit dem Raum zwischen dem Flansch 23 und dem Teil 25 in Verbindung steht.

Die Hochdruckhülse 20 enthält einen Kern 27, in dem ein Ventilelement 28 axial verschiebbar angeordnet ist. Zwischen dem Kern 27 und der Außenseite der Hochdruckhülse 20 ist eine torus-förmige Gasdruckfeder 29 eingesetzt, die axial verformbar ist. Dies ist im Einzelfall nicht dargestellt. Zwischen der Gasdruckfeder 29 und dem Teil 25 ist eine Druckscheibe 30 eingesetzt, die axial gegen die Wirkung der Gasdruckfeder 29 verschiebbar ist.

Die Innenhülse 22 enthält im Bereich des Flansch 23 einen Boden 31, der eine zentrale Öffnung 32 enthält, die einen Ventilsitz bildet. Dieser Ventilsitz ist von dem Ventilkörper 28 verschlossen. Der Raum 26 zwischen der Innenhülse 22 und der Gewindehülse 24 ist mit Öl gefüllt, ebenso wie der Raum zwischen dem Flansch 23 und der Druckscheibe 30.

Zu der Beschreibung des Antriebs wird nun jetzt wieder auf die Figur 1 Bezug genommen. In dem Gehäuse 1 ist ein in den Zeichnungen nicht dargestellter Motor angeordnet, der eine Welle 35 antreibt. Die Welle 35 weist eine Verzahnung auf, die mit einem Zahnrad 36 kämmt. Das Zahnrad 36 treibt die Kupplung 37 an, die im Einzelnen nicht dargestellt ist. Die Kupplung, wenn sie eingerückt ist, stellt eine Getriebeverbindung zwischen dem Zahnrad 36 und ihrer Ausgangswelle 38 her. Die Ausgangswelle 38 der Kupplung treibt über mehrere Zahnräder, die ein Getriebe bilden, das Spindelzahnrad 10 an. Wird das Spindelzahnrad 10 gegenüber der Spindel 6 verdreht, so verschiebt es sich axial, von der in Figur 1 dargestellten Position ausgehend nach rechts. Über das Kugellager 15 und die Niederdruckhülse 16 wird die Kolbenhülse 18 axial verschoben, deren Stirnkante 19 in den Raum 26 eindringt. Dadurch verringert sich das Volumen innerhalb des Raumes 26. Zum Ausgleich muss wegen der Füllung mit Öl die Druckscheibe 30 ausweichen. Dies führt zu einer Komprimierung der Gasdruckfeder 29. Diese wird dadurch gespannt. Bei weiterem Verschieben der Kolbenhülse 18 gelangt diese schließlich an einen Zapfen 39, der den Druckring 40 verschiebt. Schließlich gelangt der Druckring 40 zur Anlage an einem Tellerfederpaket 41, das dann den Ventilkörper 28 von der den Ventilsitz 32 bildenden Öffnung abhebt. Nun gelangt das Öl schlagartig in den Raum oberhalb des Kolbens 4 und treibt diesen durch die Kolbenführung 8. Dadurch wird der Nagel aus der Mündung 2 ausgetrieben. Statt des Tellerfederpakets kann auch eine einzelne Tellerfeder vorgesehen sein.

Die Kupplung 37 ist so ausgebildet, dass durch Einschieben ihrer Welle 38 die Kupplung eingerückt wird, also die Getriebeverbindung zwischen dem Zahnrad 36 und der Welle 38 hergestellt wird. Im Normalfall ist Kupplung 37 ausgerückt. Der Motor kann zwar das Zahnrad 36 antreiben, die Welle 38 bleibt aber stehen. An dem äußeren Ende der Welle 38 der Kupplung 37 ist ein Bolzen 42 mit einem Druckpunkt 43 angeordnet. Zur Betätigung des Bolzens 42 dient ein Hebel 44, der den vorderen Teil des Gehäuses 1 gabelartig umgreift. An dem Hebel 44 ist eine Feder 45 festgeschraubt, die mit ihrem freien Ende 46 an einem Zapfen 47 des Gehäuses anliegt. Wird das Gerät gegen eine Wand gedrückt, so wird die Anpresshülse 9 verschoben. Mit ihrer der Mündung 2 abgewandten Stirnkante 48 greift sie an dem Hebel 44 an und verschiebt diesen. Dadurch drückt der Hebel den Bolzen 42 in die Kupplung 37 hinein. Dies bedeutet, dass die Kupplung jetzt betätigt bzw. eingerückt wird.

Es ist auch möglich, dass die Welle 38 eine Hohlwelle ist, durch die der Bolzen 42 hindurchgreift. Dann kann durch Einschieben des Bolzens 42 die Kupplung zum Eingriff gebracht werden, ohne die Welle 38 zu verschieben.

Um die Druckfeder 29 zu spannen und anschließend den Setzvorgang auszulösen, muss also sowohl der Motor eingeschaltet sein als auch die Kupplung eingerückt werden. Diese beiden Vorgänge können unabhängig voneinander vorgenommen werden. Beispielsweise kann bei einer Reihe von zu setzenden Nägeln der Motor mit Hilfe eines Schalters eingeschaltet bleiben, während die Kupplung für jeden Setzvorgang durch den beschriebenen Vorgang eingerückt wird. Das Spannen der Schlagfeder geschieht auf diese Weise schneller, da der Motor nicht erst anzulaufen braucht.

Beim Entspannen, also der Zurückbewegung des Spindelzahnrads 10, löst sich wegen des Steilgewindes 7 die Kupplung, so dass der Motor nicht rückwärts gedreht wird.

An dem Motor kann auch ein Schwungrad vorgesehen sein, dass dann durch die Kupplung an den Vortrieb des Spindelzahnrads angekoppelt werden kann.

## Patentansprüche

1. Vorrichtung zum Erzeugen einer schlagartigen Vorschubbewegung, mit
1.1 einer Vorschubeinrichtung, die
1.1.1 zwischen einer zurückgezogenen Ausgangsposition und
1.1.2 einer vorgeschobenen Schlagposition bewegbar ist,
1.2 einer Schlagfeder (29), die
1.2.1 zur schlagartigen Bewegung der Vorschubeinrichtung aus der Ausgangsposition in die Schlagposition ausgebildet ist,
1.3 einem Antrieb zum Spannen der Schlagfeder (29), sowie mit
1.4 einer Kupplung (37), die
1.4.1 durch ein Betätigungsmittel einrückbar ist .

2. Vorrichtung nach Anspruch 1, bei der die Kupplung (37) zwischen einem Motor und einem Getriebe zum Spannen der Schlagfeder (29) angeordnet ist .

3. Vorrichtung nach Anspruch 1 oder 2, bei der die Kupplung (37) durch das Andrücken der Vorrichtung gegen einen Untergrund einrückbar ist .

4. Vorrichtung nach einem der vorhergehenden Ansprüche, bei der die Vorrichtung eine aus einem Gehäuse herausragende Anpresshülse (9) aufweist, die in Richtung auf das Gehäuse bewegbar ist und bei deren Bewegung die Kupplung (37) eingerückt wird .

5. Vorrichtung nach einem der vorhergehenden Ansprüche, bei der die Kupplung (37) und der Motor des Antriebs unabhängig voneinander betätigbar sind.

6. Vorrichtung nach einem der vorhergehenden Ansprüche, bei der die Kupplung (37) eine Lamellenkupplung ist.
